# EUROPEAN PATENT APPLICATION

(11) **EP 1 147 967 A2**
(43) Date of publication of application: **24.10.2001**
(21) Application number: 01201410.6
(22) Date of filing: 18.04.2001
(51) Int. Cl.: B62B 1/14

(54) **Transport means for heavy, rigid objects**

(30) Priority: 20.04.2000 NL 1014993
(71) Applicant: ter Horst, Menno Lucas Bernard, 7021 BL Zelhem (NL)
(72) Inventor: ter Horst, Menno Lucas Bernard, 7021 BL Zelhem (NL)

(57) **Abstract**

Transport means for transporting heavy, rigid objects, normally placed on the ground, like for example gas bottles, vessels and cases. The transport means comprise a frame, provided with wheels, onto which a stand is mounted. Over the stand a tube, provided with brackets can shift. According to the invention, the tube is brought into contact with the object, in the process of which the brackets will embrace the object. Next, a chain, cable, cord or strap is wrapped round the object and a winch pulls the object against the brackets, after which, once the tensile force in the chain, cable, cord or strap is sufficient, the tube and the object will move upwards.

## Description

The invention relates to transport means for transporting heavy, rigid objects, like gas bottles and vessels, comprising a frame, provided with wheels and with fastening means for fastening an object to the frame.

Transport means of this type are known in many different embodiments. The problem with these known transport means is that often an object still has to be lifted up, completely or partly, in order to put it on the transport means, after which it can be fixed. Lifting these heavy objects may in the long run cause injuries and even incapacity for work. In many countries, articles of law have been accepted which prohibit the lifting of heavy objects. One is obliged then to use separate lifting means, like a hoisting device, for putting the object onto the transport means. This is often felt as a waste of time. The result is that one prefers to lift the object quickly by hand. The present invention substantially obviates this problem and is characterized in that the transport means are provided with lifting means and that the fastening means are arranged for co-operating with the lifting means, such that the object is at least substantially simultaneously fastened and lifted up.

A favourable embodiment of the inventive transport means is characterized in that the fastening means comprise a chain, cable, cord or strap, which can be wrapped round the object, and a winch for tightening the chain, cable, cord or strap, such that the object is lifted-up after being clenched and locked by the chain, cable, cord or strap.

A further favourable embodiment is characterized in that the frame comprises one stand, under operational conditions in a substantially vertical position, onto which the winch is mounted. Preferably, the lifting means consist of a profile, slidable mounted to the stand, provided with support means for operationally supporting the object.

An embodiment which is robust and easy to manufacture is according to another aspect of the invention characterized in that the profile is provided with a first lug, through which the chain, cable, cord or strap operationally is fed and a second lug, to which an end of the chain, cable, cord or strap can be fixed. In this way the object is pulled against the support means when the chain, cable, cord or strap is tightened, after which the slidable mounted profile is lifted up with the winch, together with the object. The first and the second lug are positioned close together, in order to prevent lateral forces from developing, which could bring about a torsional stress.

Another favourable embodiment is characterized in that the end of the chain, cable, cord or strap is provided with a hook, for co-operating with the second lug, which enables one to put the chain, cable, cord or strap in place in a trice.

Another favourable embodiment is characterized in that a part of the chain, cable, cord or strap, between the first lug and the hook, is provided with a cover made of a non-slipping material, like rubber. This makes it practically impossible for the object to slip off the chain, cable, cord or strap.

The invention will now be further explained with a reference to the following figures, in which:
- Fig. 1: represents in side view a possible embodiment of the invention for transporting gas bottles;
- Fig. 2: represents this embodiment in front view;
- Fig. 3: represents in side view a possible embodiment of the invention for transporting vessels.

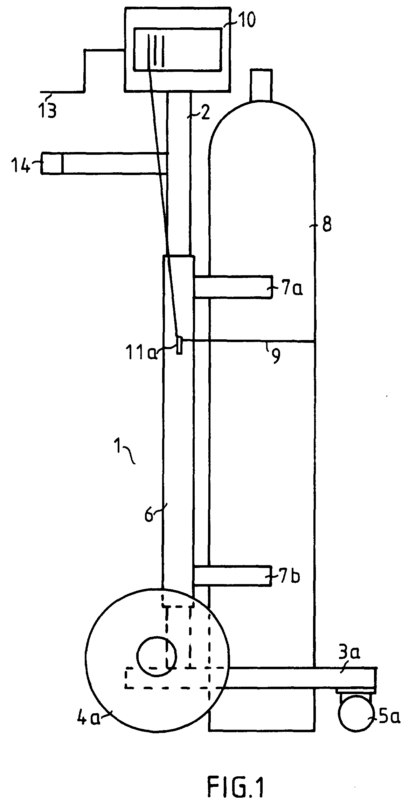

Fig. 1 represents in side view a possible embodiment of the invention for transporting gas bottles. The transport means comprises a frame 1, provided with a stand 2 and a platform, consisting of a cross beam, not visible in this figure, and two supports 3a,3b, of which only support 3a is visible in this figure. To supports 3a,3b, wheels 4a,4b and 5a,5b are mounted, of which only wheels 4a and 5a are visible in this figure. Moreover, a tube or profile 6 is provided, which can slide over stand 2, to which two brackets 7a,7b are mounted. For transporting a gas bottle 8, the transport means are moved towards gas bottle 8 in such a manner that brackets 7a,7b substantially contact gas bottle 8. Next, a chain, cable, cord or strap 9 is wrapped round gas bottle 8. Chain, cable, cord or strap 9 is part of a winch 10, well known in the art, which is for example mounted onto stand 2. It runs via a first lug 11a to a second lug 11b, not visible in the figure, where it is fixed with the aid of a hook 12. When winch 10 is operated, for example with the aid of a crank 13, chain, cable, cord or strap 9 is tightened and pulls gas bottle 8 against brackets 7a,7b. Once the tensile force is sufficient, tube or profile 6 will slide upward and will lift gas bottle 8 off the ground. Winch 10 can then be arrested in a well-known manner. Now, gas bottle 8 can easily be transported, for example with the aid of a handle 14, mounted to stand 2. In the embodiment shown here, wheels 4a,4b,5a,5b are used for the transportation, but one may also pull-over bottle 8 with the aid of handle 14, and use only wheels 4a,4b for the transportation.

The transport means can also be used for lifting a gas bottle onto an elevated surface, for example a vehicle or a loading platform. In this way, any level can be reached by selecting a favourable length for stand 2. A necessary condition is that wheels 5a,5b and supports 3a,3b can be placed underneath the vehicle or the loading platform.

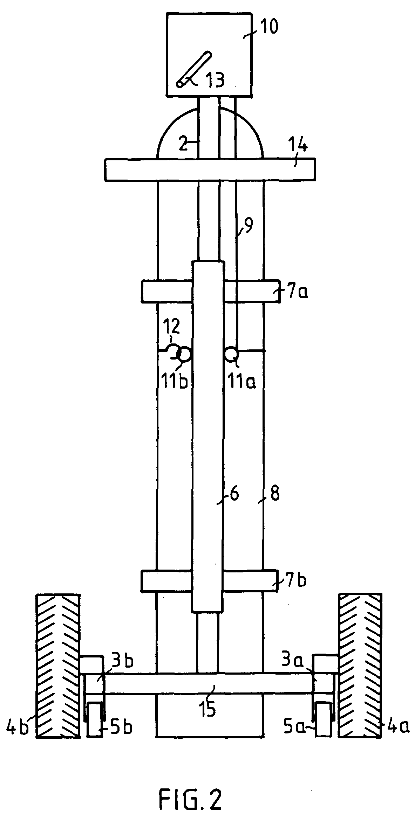

Fig. 2 represents this embodiment in front view, with stand 2, mounted to a cross beam 15, to which two supports 3a,3b are mounted, to which in turn wheels 4a,4b,5a,5b are mounted. Also visible is tube or profile 6, onto which first lug 11a and second lug 11b are mounted, and chain, cable, cord or strap 9, which is fixed with a hook 12 to second lug 11b. In addition, handle 14 is visible with which the transport means can be moved around, together with gas bottle 8.

The part of chain, cable, cord or strap 9 which is wrapped round bottle 8, is preferably provided with a cover made of a non-slipping material, like rubber. This cover prevents the chain, cable, cord or strap 9 and gas bottle 8 from being damaged and it further reduces the chance of gas bottle 8 from slipping-off the noose. Also brackets 7a,7b may be provided with a layer of a non-slipping material on the surfaces which contact gas bottle 8.

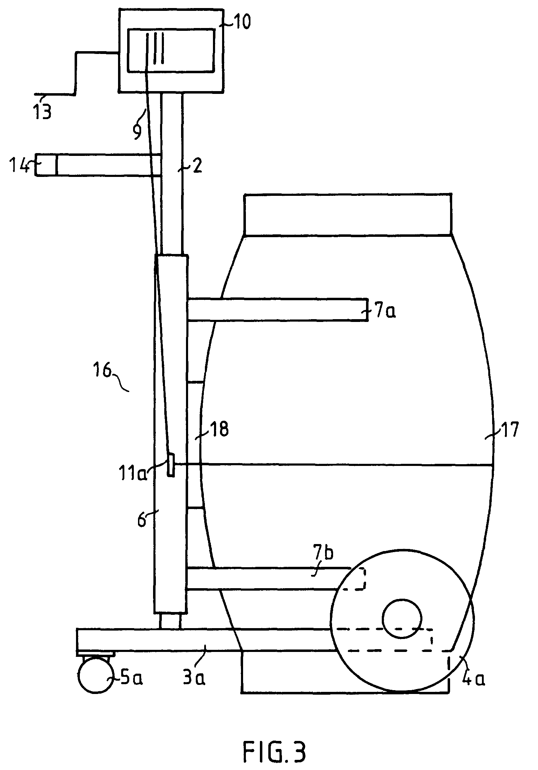

Fig. 3 represents in side view a possible embodiment of the invention for transporting vessels, with a frame 16, provided with a stand 2 and a platform, which consists of a cross beam, not visible in this figure and two supports 3a,3b, of which only support 3a is visible in this figure. To supports 3a,3b, wheels 4a,4b and 5a,5b are mounted, of which only wheels 4a and 5a are visible in this figure. Moreover, a tube or profile 6 is provided, which can slide over stand 2, to which two brackets 7a,7b are mounted. For transporting a vessel 17, the transport means are moved towards vessel 17, in such a manner that brackets 7a,7b substantially embrace vessel 17. Next a chain, cable, cord or strap 9 is wrapped round vessel 17 and tightened by a winch 10, which results in vessel 17 being pulled against brackets 7a,7b and against a rubber bolster 18. If the tensile force in chain, cable, cord or strap 9 is sufficient, tube or profile 6 will slide upward and will lift vessel 17 off the ground. Winch 10 can then be arrested and vessel 17 can easily be moved around. In the embodiment shown here, the sturdy wheels 4a,4b are located substantially underneath vessel 17, in such a manner that they will carry practically the entire weight. An advantage of the application of the inventive transport means for transporting vessels is that if a vessel would slightly drop, it would finally rest on bracket 7b and it would not contact the ground.

Apart from the embodiments shown here for transporting gas bottles and vessels, transport means can be realised in an obvious way for transporting other objects, by slightly adapting the different dimensions and by selecting a suitable shape for brackets 7a,7b. In doing so, the frame is preferably made of profiled steel, welded together, with dimensions that can be easily determined based on the weights that must be transported. Further applications are for example the transportation of kitchen articles, but also the transportation of objects used when setting up exhibitions, fairs and music shows or other events, if one is bound to rely on muscle power.

In simple applications, when incidentally an object must be lifted, winch 10 can be a well known, cheap, manually operated strap winch. For applications in which objects must be lifted all the time, an electrically operated winch with a steel cable would be advantageous, in combination with a rechargeable battery, mounted onto the frame. Moreover, it is possible to replace the winch by other lifting means, like a pneumatic cylinder, operated by a supply of compressed air, mounted onto the frame.

## Claims

1. Transport means for transporting heavy, rigid objects, like gas bottles and vessels, comprising a frame, provided with wheels and with fastening means for fastening an object to the frame, **characterized in that** the transport means are provided with lifting means and that the fastening means are arranged for co-operating with the lifting means, such that the object is at least substantially simultaneously fastened and lifted up.

2. Transport means according to claim 1, **characterized in that** the fastening means comprise a chain, cable, cord or strap, which can be wrapped round the object, and a winch for tightening the chain, cable, cord or strap.

3. Transport means according to claim 2, **characterized in that** the frame comprises one stand, under operational conditions in a substantially vertical position, onto which the winch is mounted.

4. Transport means according to claim 3, **characterized in that** the lifting means consist of a profile, slidable mounted to the stand, provided with support means for operationally supporting the object.

5. Transport means according to claim 4, **characterized in that** the profile is provided with a first lug, through which the chain, cable, cord or strap operationally is fed and a second lug, to which an end of the chain, cable, cord or strap can be fixed.

6. Transport means according to claim 5, **characterized in that** the end of the chain, cable, cord or strap is provided with a hook, for co-operating with the second lug.

7. Transport means according to claim 6, **characterized in that** a part of the chain, cable, cord or strap, between the first lug and the hook, is provided with a cover made of a non-slipping material, like rubber.
